# EUROPÄISCHE PATENTSCHRIFT

(11) **EP 1 341 409 B1**
(45) Veröffentlichungstag und Bekanntmachung des Hinweises auf die Patenterteilung: **26.05.2004**
(21) Anmeldenummer: 01990456.4
(22) Anmeldetag: 29.11.2001
(51) Int. Cl.: A01K 23/00

(54) **URIN-SAMMELVORRICHTUNG MIT LÖSBAREM KOPFTEIL**
URINE COLLECTION DEVICE WITH A DETACHABLE HEAD PART
DISPOSITIF COLLECTEUR D'URINE DOTE D'UNE PIECE TETE AMOVIBLE

(30) Priorität: 04.12.2000 DE 10060318
(43) Veröffentlichungstag der Anmeldung: 10.09.2003
(73) Patentinhaber: Solvay Pharmaceuticals GmbH, 30173 Hannover (DE)
(72) Erfinder: FRINK, Martin, 30900 Wedemark (DE)
(74) Vertreter: Gosmann, Martin, Dr.
(86) Internationale Anmeldenummer: PCT/EP2001/013963
(87) Internationale Veröffentlichungsnummer: WO 2002/045488

(56) Entgegenhaltungen:
- US-A- 2 519 743
- US-A- 3 036 553
- US-A- 3 850 159

## Beschreibung

Die vorliegende Erfindung betrifft ein Haltegeschirr mit einer Urin-Sammelvorrichtung für Pferde, mit einem vom Sammelbeutel lösbaren Kopfteil. Das erfindungsgemäße Haltegeschirr mit Urin-Sammelvorrichtung ist hierbei insbesondere für die Gewinnung eines natürlichen Gemisches konjugierter Oestrogene aus dem Harn trächtiger Stuten vorgesehen.

Oestrogene werden in der Medizin zur Hormonsubstitutionstherapie eingesetzt. Insbesondere werden Oestrogengemische zur Behandlung und Prophylaxe der bei Frauen auftretenden Beschwerden der Wechseljahre nach natürlicher oder artifizieller Menopause eingesetzt. Hierbei haben sich natürliche Gemische konjugierter Oestrogene (CE = conjugated estrogen), wie sie im Harn trächtiger Stuten (PMU = pregnant mares' urine) vorliegen, als besonders wirksam und gut verträglich erwiesen.

Das Sammeln des Urins (Harn) ist daher ein bedeutender Teilschritt in der Hormongewinnung und erfordert geeignete Vorrichtungen, die das Auffangen des Urins in praktikabler und tierverträglicher Weise gestatten. Insbesondere sollte die Vorrichtung leicht zu tragen und mit der normalen Verhaltensweise und den Mobilitäts- und Ruhebedürfnissen des Pferdes verträglich sein. Weiterhin sollte die Vorrichtung aber auch das flexible (leichtes Anbringen und Entfernen bzw. Wechseln), möglichst reine (keine Faeces) und hormonschonende Sammlung des Urins gestatten.

Das Geschirr sollte sich leicht an die individuellen Dimensionen des Pferdes anpassen lassen und die Urin-Sammelvorrichtung ausreichend in der gewünschten Position am Pferd fixieren. Nach dem Befestigen der Urin-Sammelvorrichtung sollte möglichst kein oder nur seltenes bis gelegentliches Nachadjustieren erforderlich werden und - auch bei möglichst weitgehender Bewegungsfreiheit des Pferdes - eine möglichst verlustfreie Urin-Sammlung sichergestellt sein. Ein derartiges Haltegeschirr mit Urin-Sammelvorrichtung ist bereits in der internationalen Patentanmeldung PCT/EP 00/04872 vom 29.05.2000 beschrieben. Die Urin-Sammelvorrichtung selbst sollte sich darüber hinaus bequem handhaben und hygienisch sauber halten lassen.

Es bestand daher die Aufgabe, eine an einem speziellen Haltegeschirr flexibel zu befestigende und wechselbare Urin-Sammelvorrichtung für Pferde zur Verfügung zu stellen, die den hohen Anforderungen in bezug auf eine praktikable Einsetzbarkeit im industriellen Maßstab und in bezug auf den Tragekomfort für die Pferde gerecht wird, und wobei insbesondere die Urin-Sammelvorrichtung selbst bequem gehandhabt und leicht hygienisch sauber gehalten werden kann.

Die Aufgabe wird gelöst durch die im Ansprüch 1 angegebene Urin-Sammelvorrichtung (Stuten-Urinal), und weiterhin durch die im Anspruch 2 angegebene Kombination des Stuten-Urinals, mit einem speziellen Haltegeschirr zur Anbringung des Stuten-Urinals am Pferd, sowie durch die im Anspruch 3 angegebene besondere Ausgestaltung des Kopfteils dieses Stuten-Urinals. Haltegeschirr und Urin-Sammelvorrichtung der vorliegenden Erfindung entsprechen in ihren Merkmalen weitgehend denjenigen Merkmalen des Haltegeschirrs mit Urin-Sammelvorrichtung gemäß internationaler Patentanmeldung PCT/EP 00/04872, wobei jedoch abweichend in der vorliegenden Erfindung der Sammelbeutel und das Kopfteil der Urin-Sammelvorrichtung lösbar miteinander verbunden sind.

Die Erfindung schlägt daher ein Haltegeschirr mit Urin-Sammelvorrichtung für Pferde, insbesondere Stuten, vor, welches sich durch die wie folgt angeordneten Elemente auszeichnet:
A) ein Grundgeschirr aus Gurten, umfassend:
   - einen das Pferd umspannenden beidseitig vom Rücken zur Unterbrust verlaufenden Bauchgurt (1), an dem jeweils im seitlichen oberen Teil in einigem Abstand zueinander wenigstens zwei übliche, längenverstellbare Befestigungselemente (1a) angebracht sind;
   - einen um die Vorderbrust (Bug) herum etwa horizontal auf beiden Seiten des Pferdes jeweils bis zum Bauchgurt verlaufenden Brustgurt (2);
   - einen vom Bug, zwischen den Vorderbeinen hindurch zum Bauchgurt verlaufenden Unterbrustgurt (3);
   - einen vom Widerrist beidseitig des Pferdes zum Brustgurt verlaufenden Widerristgurt (4);
   - einen vom Widerristgurt entlang der Wirbelsäule über Rücken, Lende und Kruppe des Pferdes bis zum Schweifansatz verlaufenden, längenverstellbaren Schweifriemen (5) mit einer den Schweifansatz umfassenden Schweifschlaufe (5a) ;
   - auf jeder Seite des Pferdes je einen, vom Widerristgurt etwa in Höhe des Schulteransatzes etwa horizontal bis zum Bauchgurt verlaufenden Seitengurt (6);
   wobei die einzelnen Gurte des Grundgeschirrs mit üblichen Elementen zur Einstellung der Gurtlängen ausgerüstet sind und in einer für Pferdegeschirre üblichen Weise, erforderlichenfalls vollständig oder teilweise lösbar, miteinander verbunden sind; und
B) ein etwa den Lenden- und Kruppen-Bereich bedeckendes, seitlich bis maximal etwa zur unteren Rumpflinie herabfallendes, grobmaschiges Netz (7), welches durch die am oberen Teil des Bauchgurtes befindlichen längenverstellbaren Befestigungselemente (1a) gehalten wird, und an welchem weiterhin
C) eine Urin-Sammelvorrichtung lösbar, aber Lage-fixierend aufgehängt ist, wobei diese Urin-Sammelvorrichtung ihrerseits umfaßt:
   - einen langgestreckten, unterhalb des Pferdebauches in etwa horizontaler Lage aufhängbaren Sammelbeutel (8);
   - ein sich an den Sammelbeutel im Bereich der Pferdehinterbeine anschließendes, sich trichterförmig verjüngendes Mittelteil (9), das zwischen den Hinterbeinen hindurchführt und zum Pferdehinterteil hin in einen schlauchförmigen Stutzen (9a) mit in etwa vertikaler Anordnung übergeht und wobei Sammelbeutel (8), Mittelteil (9) und Stutzen (9a) zusammen das sogenannte Auffangteil (8-9a) bilden;
   - ein Kopfteil (10) mit einer an die Pferdevulva angepaßten, an dieser weitgehend dicht anliegenden Urin-Auffangmuschel (10b), wobei der schlauchförmige Hals (10a) des Kopfteils (10) über eine lösbare Verbindung (15) (Adapter) mit dem Stutzen (9a) verbunden ist; und
   - zur Befestigung der Urin-Sammelvorrichtung an einem Haltegeschirr wenigstens einige, mit einer oder mehreren Ösen versehene Laschen (11a) und (11b), wobei
      a) die Laschen (11a) beidseitig im seitlichen, oberen Bereich des Sammelbeutels (8) angeordnet sind, und
      b) die Laschen (11b) beidseitig im oberen Bereich des Kopfteils (10) rückseitig zur Urin-Auffangmuschel (10b) angeordnet sind.

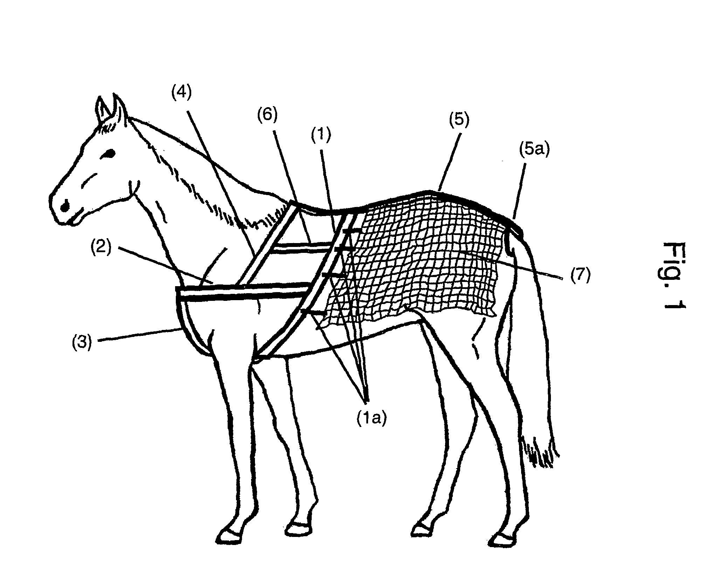

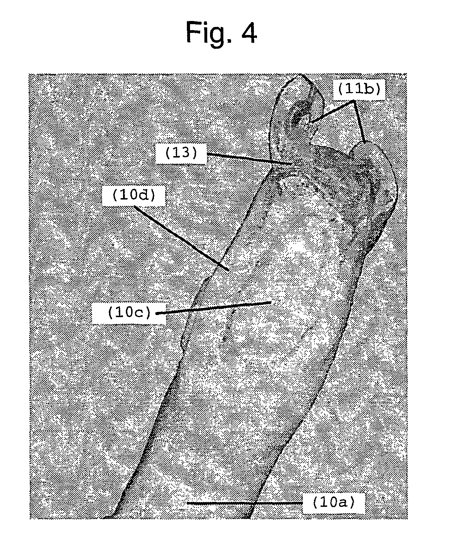

Die Erfindung wird im folgenden in ihren einzelnen Details weiter beschrieben und durch die Figuren 1 bis 6 zusätzlich erläutert.

In ihrem zentralen Aspekt betrifft die Erfindung somit eine Urin-Sammelvorrichtung für Stuten (Stuten-Urinal), die sich durch folgende Merkmale auszeichnet:
- einen langgestreckten, unterhalb des Pferdebauches in etwa horizontaler Lage aufhängbaren Sammelbeutel (8);
- ein sich an den Sammelbeutel im Bereich der Pferdehinterbeine anschließendes, sich trichterförmig verjüngendes Mittelteil (9), das zwischen den Hinterbeinen hindurchführt und zum Pferdehinterteil hin in einen schlauchförmigen Stutzen (9a) mit in etwa vertikaler Anordnung übergeht und wobei Sammelbeutel (8), Mittelteil (9) und Stutzen (9a) zusammen das sogenannte Auffangteil (8-9a) bilden;
- ein Kopfteil (10) mit einer an die Pferdevulva angepaßten, an dieser weitgehend dicht anliegenden Urin-Auffangmuschel (10b), wobei der schlauchförmige Hals (10a) des Kopfteils (10) über eine lösbare Verbindung (15) (Adapter) mit dem Stutzen (9a) verbunden ist; und
- zur Befestigung der Urin-Sammelvorrichtung an einem Haltegeschirr wenigstens einige, mit einer oder mehreren Ösen versehene Laschen (11a) und (11b), wobei
   a) die Laschen (11a) beidseitig im seitlichen, oberen Bereich des Sammelbeutels (8) angeordnet sind, und
   b) die Laschen (11b) beidseitig im oberen Bereich des Kopfteils (10) rückseitig zur Urin-Auffangmuschel (10b) angeordnet sind.

Die Urin-Sammelvorrichtung der vorliegenden Erfindung umfaßt somit zwei lösbar miteinander verbundene Einzelelemente, die aus einerseits einem Sammelbeutel (8) einschließlich Mittelteil (9) und Stutzen (9a), die zusammen das Auffangteil (8-9a) bilden, und andererseits dem Kopfteil (10) gebildet werden. Diese Einzelelemente der Urin-Sammelvorrichtung können aus an sich allen für das Pferd verträglichen, urinbeständigen Materialien wie z. B. Latex, Silikon oder dergleichen bestehen und in einer für diese Materialien in an sich üblichen Verarbeitungsweise (z. B. im Tauchverfahren oder im Spritzgußverfahren) gefertigt werden. Hierbei ist es gegebenenfalls auch möglich, verschiedene Materialien miteinander zu kombinieren. Gewünschtenfalls können so z. B. Stoffgewebe als Grundlage dienen, die mit den vorgenannten Materialien oder auch mit Gummi- oder Polyurethan-Materialien etc., wie diese zum Beschichten von Regenkleidung bzw. Zeltplanen verwendet werden, beschichtet werden. Als Stoffgewebe können vielfältige Materialien aus Natur- oder Kunstfasern eingesetzt werden, z. B. Baumwollgewebe, Nylongewebe oder dergleichen. Die fest miteinander verbundenen Bauteile des Urinals können hierbei verklebt oder verschweißt sein. Gewünschtenfalls können die jeweiligen separaten Einzelelemente des Urinals, d. h. das Auffangteil (8-9a) bzw. das Kopfteil (10), nach dem Zusammenfügen aus den zugehörigen einzeln gefertigten Teilen noch insgesamt (in üblicher Verfahrenstechnik, z. B. im Tauchverfahren oder im Spritzgußverfahren) mit einer zusätzlichen Latex- oder Silikonschutzschicht gewünschter Dicke überzogen werden. Als zweckmäßige Materialien haben sich bisher insbesondere Latex (handelsübliche Typen) oder gummierte Stoffgewebe, für einzelne Teile aber auch Silikon, erwiesen. Latex oder Silikon wird hierbei z. B. für die Fertigung des Kopfteiles (10) und Latex oder gummierte Stoffgewebe insbesondere für die Fertigung des Auffangteiles, insbesondere Sammelbeutel (8) und wahlweise Mittelstück (9), bevorzugt zum Einsatz gelangen. Die Urin-Sammelvorrichtung sollte für den Einsatzzweck ausreichend robust, aber dennoch einigermaßen flexibel ausgebildet sein, um sowohl Strapazierfähigkeit als auch Tragekomfort gleichermaßen zu'gewährleisten. Aufgrund der insgesamt flexiblen Ausgestaltung des Stuten-Urinals kann es zweckmäßig sein, solche Bereiche, die beim Gebrauch besonderer Beanspruchung unterliegen oder einer besseren Formstabilisierung bedürfen, mit Versteifungen zu versehen.

Erfindungsgemäß sind Auffangteil (8-9a) und Kopfteil (10) über eine lösbare Verbindung (15), z. B. ein Adapter, miteinander verbunden. Die lösbare Verbindung (15) bzw. das Adapter gestattet es, nach Gebrauch der Urin-Sammelvorrichtung das Auffangteil (8-9a) vom Kopfteil zu lösen. Die lösbare Verbindung bzw. das Verbindungselement (15) kann hierbei als ein aus zwei Teilen bestehendes Adapter ausgestaltet sein, wobei das eine Teil (15a) mit dem Stutzen (9a) fest oder lösbar verbunden ist und das andere Teil (15b) ebenfalls fest oder lösbar mit dem Hals (10a) des Kopfteiles (10) verbunden ist. Die lösbare Verbindung zwischen beiden Einzelteilen (15a) und (15b) des Verbindungselementes (15) kann hierbei z. B. durch Schrauben (Gewinde), Stecken (Klippen) oder die Kombination von Stecken mit seitlichem Drehen und geeigneter Arretierung (Bajonettverschluß) bewirkt werden. Bevorzugt ist ein einfacher Bajonettverschluß, prinzipiell sind aber auch andere Verbindungstechniken einsetzbar, die es ermöglichen, die Einzelteile (15a) und (15b) des Verbindungselementes bequem bzw. schnell voneinander zu lösen oder wieder miteinander zu verbinden. Bevorzugt greift hierbei das am Kopfteil befindliche Teil (15b) in das Teil (15a) des Verbindungselementes ein. Mit dem Stutzen (9a) des Auffangteiles (8-9a) bzw. mit dem Hals (10a) des Kopfteiles (10) ist das jeweilige Einzelteil (15a) bzw. (15b) des Verbindungselementes entweder fest oder gegebenenfalls auch lösbar verbunden. Eine feste Verbindung der Einzelteile (15a) bzw. (15b) mit dem Stutzen (9a) bzw. mit dem Hals (10a) kann - je nach Material des Verbindungselementes (15) - z. B. durch Kleben bzw. Verschweißen von auf dem jeweiligen Teil des Verbindungselementes überkragend aufsitzenden Bereichen des Stutzens (9a) bzw. Halses (10a) bewirkt werden. Lösbare Verbindungen der Einzelteile (15a) bzw. (15b) mit dem Stutzen (9a) bzw. Hals (10a) können durch Fixierung von auf dem jeweiligen Teil des Verbindungselementes überkragend aufsitzenden Bereichen des Stutzens (9a) bzw. Halses (10a) mittels Kabelbindern, Schlauchschellen oder ähnlichen Fixierungsmitteln bewirkt werden. Im Falle lösbarer Verbindungen der Verbindungselement-Einzelteile mit dem Stutzen (9a) bzw. dem Hals (10a) weisen die Einzelteile (15a) bzw. (15b) in bevorzugter Ausgestaltung eine Ringnut auf, die zur zugfesten Fixierung von auf dem jeweiligen Teil des Verbindungselementes überkragend aufsitzenden Bereichen des Stutzens (9a) bzw. Halses (10a) dient, indem sie bedingt durch den Anpreßdruck die an dieser Stelle liegende Zone des überkragenden Bereiches von Stutzen (9a) bzw. Hals (10a) sowie das zum Festzurren verwendete Fixierungsmittel ganz oder teilweise aufnehmen kann. Als Material für die Fertigung des Verbindungselementes (15) sind Kunststoff und leichte Metalle bzw. Metallegierungen, z. B. Aluminium oder Aluminiumlegierungen, geeignet. Gewünschtenfalls kann das mit dem Hals (10a) des Kopfteils (10) verbundene Teil (15b) des Verbindungselementes (15) noch mit einem leichtgängigen Rückschlagventil ausgerüstet sein, welches z. B. beim Liegen des Pferdes ein eventuelles Zurückfließen von bereits gesammeltem Urin aus dem Sammelbeutel (8)in das Kopfteil (10) unterbindet.

Der zweiteilige Aufbau der Urin-Sammelvorrichtung aus einem Auffangteil (8-9a) und einem Kopfteil (10), die über das Verbindungselement (15) miteinander lösbar verbunden werden können, weist eine Reihe von zusätzlichen Vorteilen gegenüber einer einteiligen Urin-Sammelvorrichtung mit fester Verbindung von Auffangteil (8-9a) und Kopfteil (10) auf. Insbesondere läßt sich eine bessere Urinqualität erzielen, da sowohl Auffangteil (8-9a) und Kopfteil (10) nach Gebrauch bequemer und besser von innen, auch unter Verwendung von Bürsten, reinigen lassen. Weiterhin läßt sich das Verbindungselement (15) so ausgestalten, daß in das Auffangteil (8-9a) zusätzlich ein dünner Plastikinnensack eingezogen werden kann. Dieser bietet einen weiteren Hygienevorteil, da nach jeder Entleerung des Sammelbeutels (8) ein neuer, ungebrauchter Plastikinnensack in das Auffangteil eingezogen werden kann. Die Öffnung des eingezogenen Plastikinnensacks wird hierbei am Verbindungselementteil (15a) nach außen umgeschlagen und nachfolgend durch das Ineinanderstecken der beiden Teile (15a) und (15b) gehalten. Die Verwendung eines solchen Plastikinnensacks erleichtert wesentlich die Reinhaltung des Auffangteils (8-9a), da Resturinmengenbildung, die stets eine unerwünschte Keimzelle für Sekundärbesiedlung mit Bakterien darstellen kann, im Sammelbeutel (8) wirkungsvoll unterbunden werden kann. Insgesamt wird durch die Erfindung daher eine bessere Qualität des gesammelten Urins gewährleistet, da durch die besseren Hygienemöglichkeiten (Re-)Kontaminationen mit Restkeimen im Sammelbeutel (8) vermieden werden können.

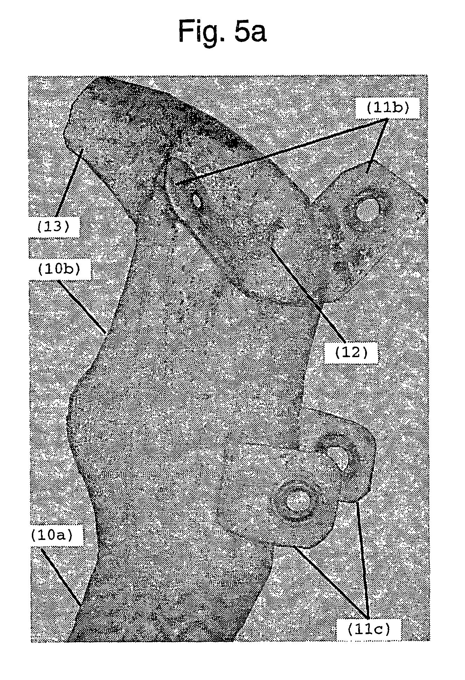

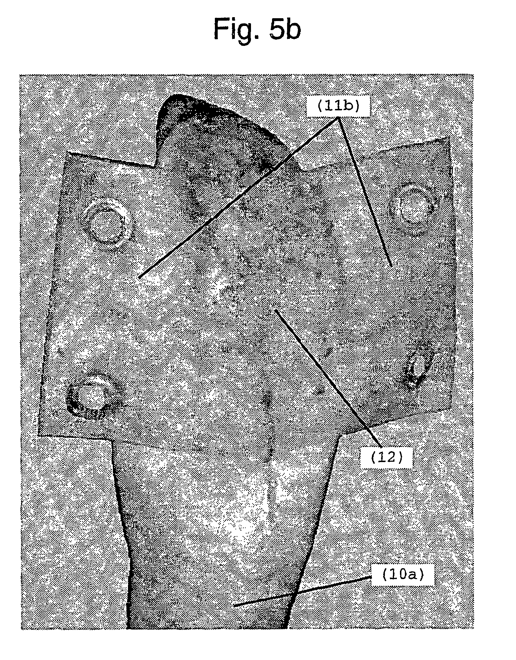

Die Aufhängsel-Laschen mit Ösen zur Befestigung der Urin-Sammelvorrichtung am Netz (7) können beliebig gestaltet sein, solange sie ihren Zweck erfüllen. So können z. B. die im Bereich des Sammelbeutels seitlich angebrachten Laschen Einzellaschen mit jeweils nur einer Öse oder auch zusammengefaßte Flügellaschen mit mehreren Ösen sein. Zweckmäßig sind z. B. Einzel- oder Flügellaschen (11a) mit 1 bis 5, insbesondere Flügellaschen mit 2 bis 3 Ösen. Die Laschen (11b) am Kopf (10) des Urinals können anstelle von Einzellaschen mit jeweils nur 1 Öse ebenfalls als kleine Flügellaschen mit 2 bis 3 Ösen, wie z. B. in Fig. 5b ersichtlich, ausgestaltet sein. Gewünschtenfalls kann das Stuten-Urinal im mittleren hinteren Bereich des Kopfteils (10) weitere Laschen (11c), wie in Fig. 5a gezeigt, besitzen; diese Laschen (11c) sind jedoch rein fakultativ und können, wie z. B. in Fig. 5b ersichtlich, auch entfallen. Die Befestigung der Urin-Sammelvorrichtung über die Laschen an das Netz des Haltegeschirrs kann auf vielfältige Weise, z. B. über Schnüre, Expander, Riemen oder dergleichen erfolgen. Als zweckmäßig hat sich für den praktischen Einsatz insbesondere die Befestigung durch Expander erwiesen. Es können handelsübliche Expander mit Haken verwendet werden; vorteilhafter aufgrund der geringeren Verletzungsgefahr für das Pferd sind jedoch Expander oder Gummiseile mit flach anliegenden Karabinerhaken, z. B. aus Kunststoff.

Eine beispielhafte Ausgestaltung des Stuten-Urinals soll anhand folgender Abmessungen weiter erläutert werden, wobei die angegebenen Maße als Größenordnung zu verstehen sind, die vom Fachmann durchaus variiert und an jeweils individuelle Gegebenheiten und Erfordernisse, z. B. der Pferdetyp, ange-. paßt werden können. Die Länge des Sammelbeutels (8), einschließlich des horizontalen Anteils des Mittelstückes (9) und Verbindungselement-Teil (15a), wird im Bereich von 40 bis 55 cm liegen, mit einem Querschnittdurchmesser von etwa 12 bis 20 cm, insbesondere etwa 15 cm. Die Höhe des Mittelteils (9), von der Unterkante des Sammelbeutels bis Oberkante des Verbindungselement-Teiles (15a), beträgt zweckmäßig etwa 30 bis 35 cm, mit einem Querschnittdurchmesser im Bereich des Stutzens (9a) von etwa 6 bis 8 cm. Das Verbindungselement (15) kann eine Höhe von etwa 7 bis 10 cm und einen Querschnittsdurchmesser von etwa 6 bis 8 cm aufweisen. Das an das Mittelteil (9) anschließbare Kopfteil (10) wird zweckmäßig eine Höhe (vertikal gemessen von Halsöffnung bis Oberkante) von etwa 30 bis 35 cm, zuzüglich der Höhe des freiliegenden Verbindungselement-Teiles (15b), aufweisen. Weitere Details und Abmessungen zum Kopfteil werden weiter unten noch gesondert beschrieben. Die Abmessungen der Flügellaschen (11a) betragen in horizontaler Länge bei 3 Ösen in etwa 15 bis 20 cm und bei 4 Ösen in etwa 20 bis 30 cm, und in der Höhe insgesamt jeweils etwa 13 bis 15 cm, mit einem freiliegenden - d. h. der nicht mit dem Sammelbeutel (8) durch Verklebung oder Verschweißung verbundene - vom Sammelbeutel (8) abstehende Ösen-Bereich von etwa 6 cm in der Höhe. Einzellaschen am Kopfteil (10) weisen in der Regel einen freiliegenden, abstehenden Ösen-Bereich von etwa 6 x 6 cm ± 1 cm auf. Kleine Flügellaschen mit z. B. 2 Ösen werden eine Breite von etwa 8 bis 10 cm und eine Höhe von ebenfalls ca. 6 cm ± 1 cm aufweisen. Zweckmäßig sind insbesondere mittelgroße Flügellaschen (11b) am Kopfteil (10), wie diese in Fig. 5b zu sehen sind. Betrachtet man das Kopfteil (10) von hinten, erkennt man, daß die Flügellaschen (11b) dieser Variante der Erfindung sozusagen ein auf dem Kopfteil (10) aufgebrachtes Rechteck mit horizontalen Maßen von etwa 20 bis 22 cm und vertikalen Maßen von etwa 12 bis 14 cm bilden, wobei in den vier Ecken dieses Rechteckes die Ösen eingebracht sind. Diese Ausgestaltung der Laschen (11b) trägt vorteilhaft zur Stabilität des Kopfteiles, insbesondere bei Gebrauch in bezug auf Robustheit aber auch in bezug auf Lagefixierung, bei. Das Kopfteil erhält so von hinten mehr Stabilität und die Laschen können nicht so schnell ausreißen. Außer rechteckigen Formen können bei den Laschen auch andere geometrische Formgestaltungen in Betracht kommen, insbesondere um auch durch die Geometrie der Laschen die Lagefixierung der Urin-Sammelvorrichtung zu optimieren. Beispielsweise können die Flügellaschen (11a) auch in etwa V-förmig gestaltet sein, z. B. indem sie einen sich zum Mittelteil (9) hin verjüngenden, freiliegenden Bereich aufweisen. Die Wandstärke der Urin-Sammelvorrichtung liegt im Millimeterbereich bei Verwendung von z. B. Latex oder gummierten Stoffgeweben, kann aber im Fall von Silikon durchaus bis etwa 10 bis 15 mm betragen. Die Wandstärke kann je nach Grad der gewünschten Flexibilität bzw. Steifigkeit im Einzelfall angepaßt werden, wobei Laschen wegen der erhöhten Beanspruchung etwas stärker als die übrigen Teile des Urinals ausgelegt sein werden.

Die vorliegende Erfindung schlägt in einem weiteren Aspekt ihrer Ausgestaltung ein Kopfteil (10) für eine Urin-Sammelvorrichtung (Stuten-Urinal) vor, das folgende Merkmale aufweist:
- eine im oberen Bereich angeordnete, in seitlicher Ansicht auf der Innenseite S-förmig verlaufende, an die Pferdevulva angepaßte und an dieser weitgehend dicht anliegende Urin-Auffangmuschel (10b), und wobei
- die Urin-Auffangmuschel in der Innenseitenaufsicht als ein ovaler bis eiförmiger, die Urin-Eintrittsöffnung (10c) umschließender Kranz (10d) ausgebildet ist; und
- einen im unteren Bereich des Kopfteils befindlichen, schlauchförmigen Hals (10a) mit Verbindungselement-Teil (15a), das über sein Gegenstück, dem am Einlaufstutzen eines Urin-Sammelbeutels sitzenden Verbindungselement-Teil (15b), zur lösbaren Verbindung des Kopfteils (10) mit dem Einlaufstutzen eines Urin-Sammelbeutels dient.

Für eine optimale, möglichst verlustfreie Sammlung des Urins ist die Form des Kopfteils (10) der Urin-Sammelvorrichtung in besonderer Weise so ausgestaltet, dass es eine geometrisch an die Anatomie der Pferdevulva angepaßte, dort weitgehend dicht anliegende Urin-Auffangmuschel (10b) aufweist. Die Urin-Auffangmuschel schließt den oberen Bereich des Kopfteils (10) ab und verläuft in seitlicher Ansicht auf der zur Vulva hin ausgerichteten Innenseite etwa S-förmig. In der Innenseitenaufsicht ist die Urin-Auffangmuschel als ein. ovaler bzw. eiförmig bis tropfenförmig, die Urineintrittsöffnung umschließender Kranz (10c) ausgebildet. Die Urin-Auffangmuschel besteht vorzugsweise aus denselben flexiblen Materialien, wie die übrigen Teile der Urin-Sammelvorrichtung, z. B. Latex, Silikon oder dergleichen. Das Kopfteil ist ebenfalls insgesamt flexibel ausgestaltet, wobei es aber zur besseren Formstabilisierung während des Gebrauchs oder zur Verbesserung der Strapazierfähigkeit zweckmäßig sein kann, den rückwärtigen oberen Bereich des Kopfteils - d. h. im Ansatzbereich der Laschen (11b) sowie gegebenenfalls einschließlich des Bereiches von einigen Zentimetern darüber und/oder darunter - zu verstärken oder gegebenenfalls mit flexiblen Versteifungselementen zu versehen. Diese Verstärkungselemente bzw. Versteifungselemente können mit den Laschen (11b) verbunden sein und an deren Materialstärke angepaßt sein. Ein solches Versteifungselement (12) ist z. B. für Einzellaschen in Fig. 5a mit einer der rückwärtigen Kopfteilbreite entsprechenden Breite von etwa 6 bis 7 cm und einer Höhe von etwa 8 cm zu sehen. Ein bevorzugt ausgestaltetes Kopfteil (10) mit einem Versteifungselement kombiniert mit beidseitig jeweils zwei-ösigen Flügellaschen (11b) ist z. B. in Fig. 5b ersichtlich und weiter oben bereits mit beispielhaften Maßen beschrieben.

Die geometrischen Dimensionen der Auffangmuschel werden in der Regel im nachfolgenden Bereich liegen, wobei die nachstehenden Maßangaben als variabel zu verstehen und nur als beispielhafte Orientierungshilfe für die individuelle Ausgestaltung und Anpassung im konkreten Anwendungsfall, z. B. an den jeweiligen Pferdetyp, gedacht sind. Für ein normales Pferd ("Normaltyp") betragen die Maße in der Regel:
a) Dimensionen der Urin-Eintrittsöffnung (10c): Längsachse (vertikal) etwa 9 bis 13 cm; Querachse, unterer Bereich gemessen etwa 2 cm oberhalb der unteren Innenkante etwa 4 bis 7 cm, oberer Bereich gemessen etwa 2 cm unterhalb der oberen Innenkante etwa 2 bis 4 cm.
b) Kranz (10d): Längsachse (vertikal) etwa 12 bis 18 cm, Quersachse, unterer Bereich (gemessen wie bei Urin-Auffangöffnung) etwa 7 bis 12 cm, oberer Bereich (gemessen wie bei Urin-Auffangöffnung) etwa 5 bis 9 cm; Kranzstärke etwa 1,5 bis 2,5 cm.

Bei Kaltblütern ("Kaltbluttyp") ist die Urin-Eintrittsöffnung regelmäßig größer als zuvor für den Normaltyp beschrieben. So wird die Dimension der Urin-Eintrittsöffnung beim Kaltbluttyp in der Längsachse (vertikal) Maße von in etwa 13 bis 20 cm aufweisen, wobei die übrigen Maße denjenigen der für den Normaltyp unter a) und b) angegebenen Maße entsprechen.

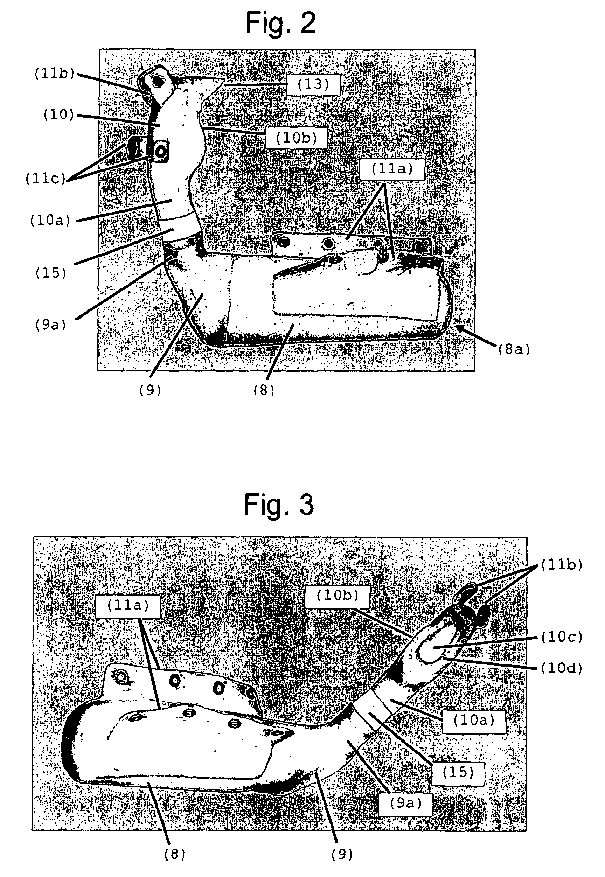

In der seitlichen Aufsicht des Kopfteiles (siehe z. B. Fig. 2) beträgt die seitliche vertikale Ausdehnung des Außenbogens des S-förmigen Kopfteiles in Höhe des unteren Endes der Urin-Auffangmuschel (10b) - d. h. in Fig. 2 etwa auf Höhe der Laschen (11c) - in etwa 10 bis 15 cm; die entsprechende seitlich vertikale Ausdehnung des darüberliegenden Innenbogens des S-förmigen Kopfteils beträgt in etwa 7 bis 12 cm.

Die Urin-Auffangmuschel kann gewünschtenfalls im oberen Kranzbereich noch eine Einkerbung (Dammkerbe) aufweisen, die sich zwischen Vulva und After quasi als Reiter über den Damm legt und vorteilhaft die Ausrichtung und mittlere Lagefixierung der Urin-Auffangmuschel über der Vulva unterstützt. Sofern sich daher die Urin-Auffangmuschel gegebenenfalls durch gelegentliches Liegen der Stute aus ihrer ursprünglichen Lage verschoben hatte, wird sich diese beim Aufrichten durch die Bewegung des Tieres leicht wieder in die richtige Lage zurechtrücken.

Weiterhin kann es insbesondere beim "Normaltyp" vorteilhaft sein, am Kopfteil (10) pferdeseitig über der Urin-Auffangmuschel ein dünnes, sehr flexibles, z. B. aus Latex bzw. Silikon gefertigtes Vordach (13) als Kotabscheider und zum Abweisen von gegebenenfalls nach dem Koten noch geringer Mengen nachfließender Flüssigkeit vorzusehen. Das Vordach (13) ist jedoch rein fakultativ und die erfindungsgemäße Funktion des Kopfteils (10) ist auch ohne ein solches Vordach beim Gebrauch in jeder Hinsicht bereits optimal gewährleistet. In der Regel wird das Vordach daher sowohl beim Normaltyp als auch beim Kaltbluttyp nicht erforderlich sein und Pferde vom Haflingertyp kommen regelmäßig komplett ohne Vordach aus. Ein Vordach kann sich aber bei bestimmten Pferderassen, Typen oder insbesondere Stuten, die schon häufiger gefohlt haben, als zweckmäßig erweisen. Sofern das Kopfteil gewünschtenfalls mit einem Vordach (13) ausgerüstet ist, genügen bereits geringe Abmessungen, die zur Anpassung an das Tier, etwa im Bereich von 4 x 4 bis 6 x 6 cm liegen; hierbei werden etwa 2 bis 3 cm auf dem Kopfteil verklebt oder verschweißt aufliegen und die restlichen maximal 2 bis 3 cm (bzw. nach Anpassung noch weiter verkürzt auf 1 bis 2 cm) als eigentliches Vordach zur Seite der Urin-Auffangmuschel überstehen. Maximale Abmessungen dieses Daches liegen zur Anpassung an das Tier etwa im Bereich von maximal 8 x 8 bis 10 x 10 cm, wobei dann etwa 4 bis 5 cm auf dem Kopfteil verklebt oder verschweißt aufliegen und die restlichen 4 bis 5 cm als eigentliches Vordach zur Seite der Urin-Auffangmuschel überstehen. Bei der Fertigung eines Kopfteils mit Vordach sollte zweckmäßigerweise darauf geachtet werden, daß das Vordach zunächst eine Überlänge von einigen Zentimetern (beispielsweise etwa 2 bis 5 cm) aufweisen sollte, um eine bequeme individuelle Anpassung der Vordachlänge an das jeweilige Tier durch einfaches Zuschneiden und gegebenenfalls durch Runden von Ecken zu ermöglichen. Durch dieses als Kotabscheider dienende Vordach wird auch in den vorstehend angezeigten Fällen für den fakultativen Einsatz dieses Vordaches eine unerwünschte Verschmutzung des Urins durch Kot wirkungsvoll vermieden und eine gute Qualität und Reinheit des gesammelten Urins gewährleistet.

Zur Befestigung der erfindungsgemäßen Urin-Sammelvorrichtung an Pferden eignet sich insbesondere ein Haltegeschirr, das bereits in der internationalen Patentanmeldung PCT/EP 00/04872 beschrieben ist und folgende Merkmale aufweist:
A) ein Grundgeschirr aus Gurten, umfassend:
   - einen das Pferd umspannenden beidseitig vom Rücken zur Unterbrust verlaufenden Bauchgurt (1), an dem jeweils im seitlichen oberen Teil in einigem Abstand zueinander wenigstens zwei übliche, längenverstellbare Befestigungselemente (1a) angebracht sind;
   - einen um die Vorderbrust (Bug) herum etwa horizontal auf beiden Seiten des Pferdes jeweils bis zum Bauchgurt verlaufenden Brustgurt (2);
   - einen vom Bug, zwischen den Vorderbeinen hindurch zum Bauchgurt verlaufenden Unterbrustgurt (3);
   - einen vom Widerrist beidseitig des Pferdes zum Brustgurt verlaufenden Widerristgurt (4);
   - einen vom Widerristgurt entlang der Wirbelsäule über Rücken, Lende und Kruppe des Pferdes bis zum Schweifansatz verlaufenden, längenverstellbaren Schweifriemen (5) mit einer den Schweifansatz umfassenden Schweifschlaufe (5a);
   - auf jeder Seite des Pferdes je einen,. vom Widerristgurt etwa in Höhe des Schulteransatzes etwa horizontal bis zum Bauchgurt verlaufenden Seitengurt (6);
   wobei die einzelnen Gurte des Grundgeschirrs mit üblichen Elementen zur Einstellung der Gurtlänge ausgerüstet sind und in einer für Pferdegeschirre üblichen Weise, erforderlichenfalls vollständig oder teilweise lösbar, miteinander verbunden sind; und
B) ein etwa den Lenden- und Kruppen-Bereich bedeckendes, seitlich bis maximal etwa zur unteren Rumpflinie herabfallendes, grobmaschiges Netz (7), welches durch die am oberen Teil des Bauchgurtes befindlichen, längenverstellbaren Befestigungselemente gehalten wird, und welches zur lagefixierenden, aber dennoch lösbaren Aufhängung einer unterhalb des Pferdebauches tragbaren Urin-Sammelvorrichtung dient.

In einer Variante des Haltegeschirrs kann der Widerristgurt (4) sich gegebenenfalls auf beiden Seiten des Pferdes etwa in Höhe des Schulteransatzes beginnend in Richtung zum Brustgurt Y-förmig in zwei Teilriemen aufteilen. Hierduch kann gewünschtenfalls die Stabilität und der Sitz des Haltegeschirrs am Pferd zusätzlich positiv beeinflußt werden.

Bei dem Pferdegeschirr A) kann es sich um ein an sich übliches Pferdegeschirr handeln, das in handwerklicher oder maschineller Fertigung an den im Rahmen der vorliegenden Erfindung angestrebten Verwendungszweck angepaßt wurde. Die einzelnen Gurte des Haltegeschirrs können aus an sich üblichen Materialen, wie Leder oder anderen Materialien gefertigt sein, die auch sonst für die Herstellung von Zaumzeug und Pferdegeschirr dienen. Hierbei kommen auch Verbundkonstruktionen in Betracht, z. B. auf Leder angebrachte Verstärkungselemente in Bereichen erhöhter Materialbeanspruchung. Als Materialien für solche Verstärkungselemente können flexible Kunststoffstreifen oder -gewebe bzw. auch Feuerwehrschlauchgewebe dienen. Die einzelnen Gurte sowie sonstigen Elemente des Pferdegeschirrs A) können in einer an sich für Pferdegeschirre üblichen Weise miteinander verbunden sein. Feste Verbindungen der Gurte können durch Nähte oder Nieten bewirkt werden. Das Pferdegeschirr A) sollte jedoch eine gewisse Flexibilität im Hinblick auf die individuelle Anpassung an die jeweiligen Pferdeproportionen gestatten. Sofern daher die einzelnen Gurte nicht von vorneherein in den jeweiligen Verbindungsbereichen über längenverstellbare Verbindungselemente - wie z. B. übliche Gurtschallen, Schnellspannriemen oder andere variierbare Schnellverschlüsse lösbar miteinander verbunden sind, sondern miteinander vernäht oder vernietet, also fest miteinander verbunden sind, sollten die Gurte an anderer Stelle selbst mit entsprechenden, üblichen Elementen zur Einstellung und Adjustierung der Gurtlängen ausgerüstet sein, wie z. B. die vorgenannten Gurtschnallen, Schnellspannriemen oder andere übliche Elemente zur Längenvariation. Um das Anlegen des Geschirrs in einfacher Weise durch Überstreifen über den Pferdekopf zu ermöglichen wird zweckmäßiger Weise der Bauchgurt im Bauchbereich zu öffnen und lösbar mit dem Unterbrustgurt verbunden sein. Zum Schutz bzw. zur Schonung einzelner Körperpartien des Pferdes kann das Geschirr A) weiterhin Polsterungen unterschiedlicher Stärke je nach Körperpartie aufweisen. Eine Polsterung kann insbesondere für den Vorderbrustbereich, Widerrist und Rücken, gegebenenfalls aber auch zusätzlich an der seitlichen Brustwand des Pferdes, wünschenswert sein. Es können übliche Materialien für die Polsterung verwendet werden; beispielsweise ist Filzstoff unterschiedlicher Stärke geeignet.

Ein besonderes Element B) des Haltegeschirrs zur Aufhängung bzw. Befestigung einer erfindungsgemäßen Urin-Sammelvorrichtung an Pferden stellt das grobmaschige Netz (7) dar. Die Verwendung eines Netzes im Rahmen des Haltegeschirrs weist z. B. den Vorteil auf, daß es eine Vielzahl von Befestigungsmöglichkeiten für beliebige Urin-Sammelvorrichtungen bietet und somit diese Sammelvorrichtungen in idealer Weise mit einer großen Flexibilität am Pferd fixiert und adjustiert werden können. Dieses Netz ist daher für eine optimale Aufhängung und Fixierung von erfindungsgemäßen Urin-Sammelvorrichtungen und insbesondere für Stuten sehr vorteilhaft, da hier ein möglichst verlustfreies Sammeln des Stuten-Urins nur bei dauerhafter einwandfreier Fixierung und Adjustierung der Urin-Sammelvorrichtung sichergestellt werden kann. Durch die Verwendung des Netzes zur Aufhängung von Urin-Sammelvorrichtungen und die damit gegebenen Möglichkeiten zur Fixierung und Adjustierung dieser Urin-Sammelvorrichtungen wird eine bedeutende Verbesserung der Urin-Sammlung erreicht. Ferner wird durch das Netz - im Gegensatz z. B. zu einer Pferdedecke - ein mögliches Schwitzen des Pferdes weitgehend vermieden. Eine Beeinträchtigung der Oestrogengewinnung durch Hormonverlust über Schweißsekretion ist daher bei Verwendung des Netzes zur Befestigung erfindungsgemäßer Urin-Sammelbehälter nicht zu befürchten.

Die seitlichen Enden des Netzes können bis maximal zur unteren Rumpflinie herabhängen; in einer anderen beispielhaften Ausführung reicht es, wenn die seitlichen Enden des Netzes bis etwa auf die Höhe des Brustgurtes (2) herabfallen. Die herabhängenden Enden des Netzes können gewünschtenfalls noch durch einen oder mehrere locker angelegte, unter dem Pferd von der einen zur anderen Seite geführte Riemen zusätzlich gehalten werden. Das grobmaschige Netz kann aus an sich allen für das Pferd verträglichen Materialen bestehen, wie insbesondere z. B. Nylon, ggf. aber auch Kunstfasern, Leder oder Hanf. Die Stärke des Netzgewebes sollte dabei ausreichend robust ausgelegt sein, um auch länger Beanspruchung in der Praxis standzuhalten. Die Netzränder werden in vorteilhaften, bevorzugten Ausgestaltungen des Netzes verstärkt ausgelegt sein. Desweiteren empfiehlt es sich, das Netz an den Rändern z. B. hitzezubehandeln, um durch ein Anschmelzen der Nylonfasern die Gefahr des Auffaserns zu unterbinden.

Die nachfolgenden Angaben zu den Abmessungen des Netzes sollen dessen Ausgestaltung nur beispielhaft erläutern. Es versteht sich von selbst, daß der Fachmann diese Maße durchaus variieren und an die jeweils individuellen Gegebenheiten, Erfordernisse oder sonstige Rahmenbedingungen bei der Ausführung der vorliegenden Erfindung an einem gegebenen Ort anpassen kann. Die Maschengröße des Netzes kann im allgemeinen in der Größenordnung von etwa 30 bis 60 mm liegen. Als zweckmäßig hat sich insbesondere eine Maschengröße von etwa 45 mm erwiesen. Der Querschnittsdurchmesser (Stärke) der Netzschnüre wird etwa im Bereich von 3 bis 8 mm, insbesondere bei etwa 5 mm, liegen.

Das Haltegeschirr mit Netz (7) ist universell einsetzbar und aufgrund der Konstruktion gut zu handhaben. Urin-Sammelvorrichtungen lassen sich flexibel und mit guter Lagefixierung daran aufhängen. Das Anbringen bzw. Abnehmen des Geschirrs kann nach erfolgter Grundeinstellung schnell mit flüssigem Bewegungsablauf durchgeführt werden, so daß eine Beunruhigung des Pferdes durch ungewollte hektische Handhabungen und die daraus resultierenden Gefahren kaum zu befürchten sind. Das Anlegen bzw. Abnehmen des Haltegeschirrs ist daher in 2 bis 3 Min. zu bewerkstelligen, wobei in der Regel lediglich die zwischen den Vorderbeinen gelegenen Bauchschnallen von Bauch- und Unterbrustgurt zu öffnen sind. Das Haltegeschirr ist sowohl mit als auch ohne Urin-Sammelvorrichtung Langzeit-tragbar. So ist z. B. eine 24-stündige Urin-Sammlung bei entsprechender Pflege und Sauberhaltung der Urin-Sammelvorrichtung möglich, wobei die Urin-Sammelvorrichtung für die täglich mindestens zweimalige Entleerung und Reinigung leicht vom Pferd abgenommen bzw. gewechselt werden kann. Hierbei erweist es sich insbesondere bei Zwischenentleerungen der Urin-Sammelvorrichtung als sehr vorteilhaft, daß- aufgrund der lösbaren Verbindung von Kopfteil (10) und Auffangteil (8-9a) - gewünschtenfalls nur das Auffangteil (8-9a) vom Pferd genommen werden muß, während das Kopfteil (10) am Pferd verbleiben kann. Aus hygienischen Gründen ist es weiterhin vorteilhaft, daß insbesondere bei jeder Zwischenentleerung ein neuer Plastikinnensack in das Auffangteil (8-9a) eingezogen werden kann und somit Zwischenreinigungen des Auffangteils (8-9a) nicht erforderlich sind. Weiterhin erlaubt die vorliegende Erfindung eine leichtere individuelle Anpassung des Kopfteiles (10) an das jeweilige Pferd, da gegebenenfalls nur das Kopfteil, nicht aber die gesamte Urin-Sammelvorrichtung beim Austausch vom Pferd genommen werden muß.

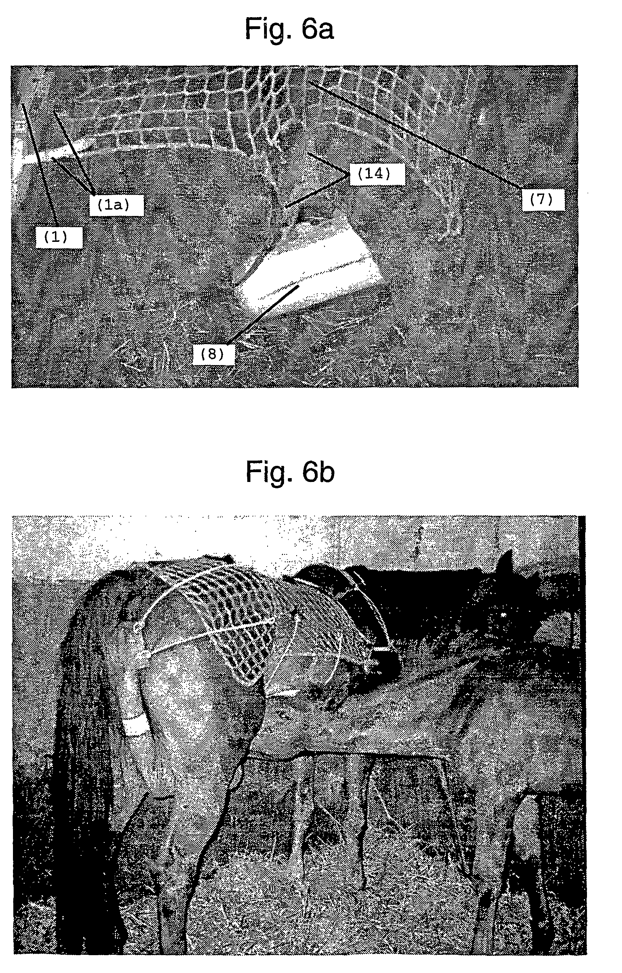

Das Pferd ist aufgrund des Haltegeschirrs selbst mit Urin-Sammelvorrichtung frei beweglich. Aufgrund der für das Pferd gewährleisteten hohen Flexibilität und Bewegungsfreiheit ist bei Verwendung des Haltegeschirrs mit oder ohne erfindungsgemäßer Urin-Sammelvorrichtung eine Ständerhaltung des Pferdes nicht erforderlich. Weidegang ist für die Pferde daher jederzeit möglich, auch mit angehängter Urin-Sammelvorrichtung. Ebenso können Fohlen auch bei Stuten mit angehängter Urin-Sammelvorrichtung jederzeit ohne Probleme selbständig saugen; siehe z. B. Fig. 6b. Die Urin-Sammelvorrichtung ist aufgrund der gewählten Materialien und Konstruktion sehr robust und kann sowohl in warmen oder kalten Zonen der Erde eingesetzt werden. Das Haltegeschirr mit erfindungsgemäßer Urin-Sammelvorrichtung läßt sich daher sehr flexibel auf die lokalen Verhältnisse des Pferdebetriebes, in dem Urin gesammelt werden soll, einstellen. Beispielsweise kann erforderlichenfalls das gesamte Haltegeschirr und die Urin-Sammelvorrichtung leicht und schnell abgenommen und wieder angelegt werden; oder das Haltegeschirr kann längere Zeit am Pferd belassen und erforderlichenfalls nur die Urin-Sammelvorrichtung, oder z. B. kurzzeitig zum Entleeren, sogar nur das Auffangteil (8-9a) abgenommen werden. Z. B. kann das Haltegeschirr mit oder ohne Netz am Pferd verbleiben, insbesondere tagsüber für den Weidegang, falls nur eine Nachtsammlung von Urin vorgesehen ist; es kann aber auch das gesamte Haltegeschirr mit Urin-Sammelvorrichtung - wie vorstehend bereits ausgeführt bei entsprechender Pflege und regelmäßiger Entleerung - komplett längere Zeit am Pferd verbleiben, ohne dessen Bewegungsfreiheit bzw. die Möglichkeit zum Weidegang oder das Säugen von Fohlen einzuschränken.

Zur Erläuterung der vorstehenden Erfindung dienen die folgenden Figuren:

### Fig. 1

Schematische Darstellung des Haltegeschirrs zum Anbringen einer Urin-Sammelvorrichtung am Pferd:
Bauchgurt (1); längenverstellbare Befestigungselemente (1a); Brustgurt (2); Unterbrustgurt (3); Widerristgurt (4); Schweifriemen (5) mit Schweifschlaufe (5a); Seitengurt (6); Netz (7).

### Fig. 2

Seitliche Abbildung der Urin-Sammelvorrichtung mit Seitenansicht des Kopfteils (10):
Urin-Sammelbeutel (8) mit möglicher Position eines Urin-Ablaufschlauches (8a); Mittelteil (9) mit schlauchförmigem Stutzen (9a); Kopfteil (10) mit Hals (10a); Urin-Auffangmuschel (10b); Laschen (11a) in Form von Flügellaschen mit jeweils 4 Ösen (anstelle von 3 Ösen in bevorzugter Ausführung); Einzellaschen (11b); fakultative Einzellaschen (11c), die gegebenenfalls nach oben zu den Laschen (11b) verschoben und mit diesen zu kleinen Flügellaschen mit jeweils 2 Ösen verschmolzen sein können; Vordach (13) als Kotabscheider und After-Flüssigkeitsabscheider; (15) lösbares Verbindungselement, z. B. Bajonettverschluß.

### Fig. 3

Seitliche Abbildung der Urin-Sammelvorrichtung mit Innenseitenaufsicht der Urin-Auffangmuschel (10b):
(8) bis (10a) und (11a) bis (11b) und (15) siehe Erläuterungen zu Fig. 2; Urin-Auffangmuschel (10b) mit Urin-Eintrittsöffnung (10c); Kranz (10d) der Urin-Auffangmuschel.

### Fig. 4

Vergrößerte Innenseitenaufsicht auf die Urin-Auffangmuschel (10b) :
(10a) bis (11b) und (15) siehe Erläuterungen zu Fig. 3; Vordach (13) als Kotabscheider und After-Flüssigkeitsabscheider.

### Fig. 5a

Rückseitig/seitliche Ansicht des Kopfteils (10) der Urin-Sammelvorrichtung mit Einzellaschen:
Hals (10a) des Kopfteils Lage der Urin-Auffangmuschel (10b); Einzellaschen (11b); fakultative Einzellaschen (11c), die gegebenenfalls nach oben zu den Laschen (11b) verschoben und mit diesen zu kleinen Flügellaschen mit jeweils 2 Ösen verschmolzen sein können; Versteifung (12) im Kopfbereich, optional mit den Laschen (11b) verschmolzen; Vordach (13) als Kotabscheider und After-Flüssigkeitsabscheider; (15) lösbares Verbindungselement, z. B. Bajonettverschluß.

### Fig. 5b

Rückseitige Ansicht eines bevorzugten Kopfteils (10) der Urin-Sammelvorrichtung mit beidseitig zwei-ösigen Flügellaschen:
Hals (10a) des Kopfteils; Fluglaschen (11b); kombiniert mit Versteifung (12) im Kopfbereich, d. h. hier optional mit den Laschen (11b) verschmolzen; (15) lösbares Verbindungselement, z. B. Bajonettverschluß.

### Fig. 6a

Seitliche Ansicht einer am Pferd befestigten Urin-Sammelvorrichtung:
Bauchgurt (1) mit längenverstellbaren Befestigungselementen (1a) für das Netz (7); Urin-Sammelvorrichtung mit sichtbarem Urin-Sammelbeutel (8); Expander (14).

### Fig. 6b

Ansicht einer am Pferd befestigten im Gebrauch befindlichen Urin-Sammelvorrichtung mit Kopfteil gemäß Fig. 5b, und saugendes Fohlen.

## Patentansprüche

1. Haltegeschirr mit Urin-Sammelvorrichtung für Pferde, insbesondere Stuten, **gekennzeichnet durch**:
A) ein Grundgeschirr aus Gurten, umfassend:
- einen das Pferd umspannenden beidseitig vom Rücken zur Unterbrust verlaufenden Bauchgurt (1), an dem jeweils im seitlichen oberen Teil in einigem Abstand zueinander wenigstens zwei übliche, längenverstellbare Befestigungselemente (1a) angebracht sind;
- einen um die Vorderbrust (Bug) herum etwa horizontal auf beiden Seiten des Pferdes jeweils bis zum Bauchgurt verlaufenden Brustgurt (2);
- einen vom Bug, zwischen den Vorderbeinen hindurch zum Bauchgurt verlaufenden Unterbrustgurt (3);
- einen vom Widerrist beidseitig des Pferdes zum Brustgurt verlaufenden Widerristgurt (4);
- einen vom Widerristgurt entlang der Wirbelsäule über Rücken, Lende und Kruppe des Pferdes bis zum Schweifansatz verlaufenden, längenverstellbaren Schweifriemen (5) mit einer den Schweifansatz umfassenden Schweifschlaufe (5a);
- auf jeder Seite des Pferdes je einen, vom Widerristgurt etwa in Höhe des Schulteransatzes etwa horizontal bis zum Bauchgurt verlaufenden Seitengurt (6);
wobei die einzelnen Gurte des Grundgeschirrs mit üblichen Elementen zur Einstellung der Gurtlängen ausgerüstet sind und in einer für Pferdegeschirre üblichen Weise, erforderlichenfalls vollständig oder teilweise lösbar, miteinander verbunden sind; und
B) ein etwa den Lenden- und Kruppen-Bereich bedeckendes, seitlich bis maximal etwa zur unteren Rumpflinie herabfallendes, grobmaschiges Netz (7), welches **durch** die am oberen Teil des Bauchgurtes befindlichen längenverstellbaren Befestigungselemente (1a) gehalten wird, und an welchem weiterhin
C) eine Urin-Sammelvorrichtung lösbar, aber Lage-fixierend aufgehängt ist, wobei diese Urin-Sammelvorrichtung ihrerseits umfaßt:
- einen langgestreckten, unterhalb des Pferdebauches in etwa horizontaler Lage aufhängbaren Sammelbeutel (8);
- ein sich an den Sammelbeutel im Bereich der Pferdehinterbeine anschließendes, sich trichterförmig verjüngendes Mittelteil (9), das zwischen den Hinterbeinen hindurchführt und zum Pferdehinterteil hin in einen schlauchförmigen Stutzen (9a) mit in etwa vertikaler Anordnung übergeht, und wobei Sammelbeutel (8), Mittelteil (9) und Stutzen (9a) zusammen das sogenannte Auffangteil (8-9a) bilden;
- ein Kopfteil (10) mit einer an die Pferdevulva angepaßten, an dieser weitgehend dicht anliegenden Urin-Auffangmuschel (10b), wobei der schlauchförmige Hals (10a) des Kopfteils (10) über eine lösbare Verbindung (15), vorzugsweise ein Adapter, mit dem Stutzen (9a) verbunden ist; und
- zur Befestigung der Urin-Sammelvorrichtung an einem Haltegeschirr wenigstens einige, mit einer oder mehreren Ösen versehene Laschen (11a) und (11b), wobei
a)die Laschen (11a) beidseitig im seitlichen, oberen Bereich des Sammelbeutels (8) angeordnet sind, und
b)die Laschen (11b) beidseitig im oberen Bereich des Kopfteils (10) rückseitig zur Urin-Auffangmuschel (10b) angeordnet sind.

2. Urin-Sammelvorrichtung für Stuten, **gekennzeichnet durch**:
- einen langgestreckten, unterhalb des Pferdebauches in etwa horizontaler Lage aufhängbaren Sammelbeutel (8);
- ein sich an den Sammelbeutel im Bereich der Pferdehinterbeine anschließendes, sich trichterförmig verjüngendes Mittelteil (9), das zwischen den Hinterbeinen hindurchführt und zum Pferdehinterteil hin in einen schlauchförmigen Stutzen (9a) mit in etwa vertikaler Anordnung übergeht und wobei Sammelbeutel (8), Mittelteil (9) und Stutzen (9a) zusammen das sogenannte Auffangteil (8-9a) bilden;
- ein Kopfteil (10) mit einer an die Pferdevulva angepaßten, an dieser weitgehend dicht anliegenden Urin-Auffangmuschel (10b), wobei das schlauchförmige Hals (10a) des Kopfteils (10) über eine lösbare Verbindung (15), vorzugsweise ein Adapter, mit dem Stutzen (9a) verbunden ist; und
- zur Befestigung der Urin-Sammelvorrichtung an einem Haltegeschirr wenigstens einige, mit einer oder mehreren Ösen versehene Laschen (11a) und (11b), wobei
a) die Laschen (11a) beidseitig im seitlichen, oberen Bereich des Sammelbeutels (8) angeordnet sind, und
b)die Laschen (11b) beidseitig im oberen Bereich des Kopfteils (10) rückseitig zur Urin-Auffangmuschel (10b) angeordnet sind.

3. Kopfteil (10) für eine Urin-Sammelvorrichtung, **gekennzeichnet durch**:
- eine im oberen Bereich angeordnete, in seitlicher Ansicht auf der Innenseite S-förmig verlaufende, an die Pferdevulva angepaßte und an dieser weitgehend dicht anliegende Urin-Auffangmuschel (10b), und wobei
- die Urin-Auffangmuschel in der Innenseitenaufsicht als ein ovaler bis eiförmiger, die Urin-Eintrittsöffnung (10c) umschließender Kranz (10d) ausgebildet ist; und
- einen im unteren Bereich des Kopfteils befindlichen, schlauchförmigen Hals (10a) mit Verbindungselement-Teil (15a), das über sein Gegenstück, dem am Einlaufstutzen eines Urin-Sammelbeutels sitzenden Verbindungselement-Teil (15b), zur lösbaren Verbindung des Kopfteils (10) mit dem Einlaufstutzen eines Urin-Sammelbeutels dient.

## Claims

1. A holding harness with urine collecting device for horses, in particular mares, **characterised by**:
A) a basic harness consisting of straps, comprising:
- a girth (1) passing around the horse and extending on both sides from the back to the lower breast, to which girth in each case at least two conventional fastening elements (1a) of adjustable length are attached in the lateral upper part at some distance from each other;
- a breast strap (2) extending around the front breast (shoulder) approximately horizontally on both sides of the horse in each case as far as the girth;
- a lower breast strap (3) extending from the shoulder, through between the front legs to the girth;
- a withers strap (4) extending from the withers on both sides of the horse to the breast strap;
- a crupper (5) of adjustable length, extending from the withers strap along the spinal column over the back, loins and croup of the horse to the tail head, with a tail loop (5a) surrounding the tail head;
- on either side of the horse one side strap (6) extending from the withers strap approximately at the height of the start of the shoulder approximately horizontally as far as the girth;
the individual straps of the basic harness being equipped with conventional elements for adjusting the strap lengths and being joined together in a manner conventional for horse harnesses, if necessary in completely or partially detachable manner; and
B) a large-mesh net (7) covering approximately the loin and croup region and descending laterally to at most approximately the lower rump line, which net is held by the fastening elements (1a) of adjustable length located on the upper part of the girth, and on which furthermore
C) a urine collecting device is suspended detachably but in a position-fixing manner, this urine collecting device in turn comprising:
- an elongate collecting pouch (8) which can be suspended in an approximately horizontal position beneath the belly of the horse;
- a middle section (9) which tapers in a funnel shape, adjoining the collecting pouch in the region of the rear legs of the horse, which section is passed through between the rear legs and merges into a tubular connecting piece (9a) with an approximately vertical arrangement towards the rear part of the horse, and the collecting pouch (8), middle section (9) and connecting piece (9a) together forming the so-called collecting part (8-9a);
- a head part (10), with a urine collecting shell (10b) adapted to the vulva of the horse and lying largely tightly thereagainst, the tubular neck (10a) of the head part (10) being connected to the connecting piece (9a) via a detachable connection (15), preferably an adapter; and
- for fastening the urine collecting device to a holding harness, at least several flaps (11a) and (11b) provided with one or more eyelets,
a)the flaps (11a) being arranged on both sides in the lateral, upper region of the collecting pouch (8), and
b)the flaps (11b) being arranged to the rear side of the urine collecting shell (10b) on both sides in the upper region of the head part (10).

2. A urine collecting device for mares, **characterised by**:
- an elongate collecting pouch (8) which can be suspended in an approximately horizontal position beneath the belly of the horse;
- a middle section (9) which tapers in a funnel shape, adjoining the collecting pouch in the region of the rear legs of the horse, which section is passed through between the rear legs and merges into a tubular connecting piece (9a) with an approximately vertical arrangement towards the rear part of the horse, and the collecting pouch (8), middle section (9) and connecting piece (9a) together forming the so-called collecting part (8-9a);
- a head part (10), with a urine collecting shell (10b) adapted to the vulva of the horse and lying largely tightly thereagainst, the tubular neck (10a) of the head part (10) being connected to the connecting piece (9a) via a detachable connection (15), preferably an adapter; and
- for fastening the urine collecting device to a holding harness, at least several flaps (11a) and (11b) provided with one or more eyelets,
a) the flaps (11a) being arranged on both sides in the lateral, upper region of the collecting pouch (8), and
b)the flaps (11b) being arranged to the rear side of the urine collecting shell (10b) on both sides in the upper region of the head part (10).

3. A head part (10) for a urine collecting device, **characterised by**:
- a urine collecting shell (10b) located in the upper region, which extends in an S-shape on the inside when viewed from the side, and which is adapted to the vulva of the horse and lies largely tightly thereagainst, and wherein
- the urine collecting shell when viewed from the inner side is in the form of an oval to egg-shaped crown (10d) surrounding the urine entry opening (10c); and
- a tubular neck (10a) with connecting-element part (15a) located in the lower region of the head part, which serves to connect the head part (10) detachably to the inlet connecting piece of a urine collecting pouch via its counterpart, the connecting-element part (15b) located on the entry connecting piece of a urine collecting pouch.

## Revendications

1. Harnais de maintien avec dispositif de collecte d'urine pour des chevaux, notamment des juments, **caractérisé par** :
A) un harnais de base en sangles, comprenant :
- une sangle ventrale (1) qui s'étend, des deux côtés, du dos au bas poitrail, en enserrant le cheval, et sur laquelle sont placés, dans chaque partie latérale supérieure, selon un certain espacement réciproque, au moins deux éléments de fixation (1a) usuels, réglables en longueur ;
- une sangle de poitrail (2) s'étendant autour de l'avant-poitrail, à peu près horizontalement sur chacun des deux côtés du cheval, jusqu'à la sangle ventrale ;
- une sangle de bas poitrail (3) s'étendant de l'avant-poitrail à la sangle ventrale en passant entre les pattes avant ;
- une sangle de garrot (4) s'étendant à partir du garrot, des deux côtés du cheval jusqu'à la sangle de poitrail ;
- unc lanière de queue (5) réglable en longueur, qui s'étend de la sangle de garrot, le long de la colonne vertébrale en passant sur le dos, les reins et la croupe du cheval, jusqu'à l'embase de la queue, et qui comporte une boucle de queue (5a) entourant l'embase de la queue ;
- sur chaque côté du cheval, une sangle latérale respective (6) s'étendant de la sangle de garrot, sensiblement à hauteur de l'embase d'épaule, à peu près horizontalement jusqu'à la sangle ventrale ;
les différentes sangles individuelles du harnais de base étant équipées d'éléments usuels pour le réglage des longueurs de sangle, et étant reliées mutuellement d'une façon usuelle pour des harnais de chevaux, de manière totalement ou partiellement amovible selon les besoins,
B) un filet (7) à grosses mailles, qui recouvre sensiblement la région des reins et de la croupe et retombe latéralement au maximum jusqu'à sensiblement la ligne de tronc inférieure, et qui est maintenu par les éléments de fixation (1a) réglables en longueur se trouvant sur la partie supérieure de la sangle ventrale, filet sur lequel est par ailleurs
C) suspendu, de manière amovible, mais fixé en position, un dispositif de collecte d'urine, ce dispositif de collecte d'urine comprenant pour sa part :
- une poche de collecte (8) de forme allongée, pouvant être suspendue sous le ventre du cheval dans une position sensiblement horizontale ;
- une partie centrale (9) se rétrécissant en forme d'entonnoir et se raccordant à la poche de collecte dans la région des pattes arrière du cheval, qui passe entre les pattes arrière et se transforme vers la partie postérieure du cheval en un embout (9a) de forme tubulaire dans une disposition sensiblement verticale, la poche de collecte (8), la partie centrale (9) et l'embout (9a) formant ensemble ce que l'on appelle la partie de recueil (8-9a) ;
- une partie de tête (10) comprenant une coque de recueil d'urine (10b) adaptée à la vulve du cheval et s'appliquant sur cette dernière de manière largement étanche, le goulot (10a) de forme tubulaire de la partie de tête (10) étant relié par une liaison amovible (15), de préférence un adaptateur, à l'embout (9a) ; et
- au moins quelques languettes (11a) et (11b) pourvues d'un ou plusieurs oeillets pour la fixation du dispositif de collecte d'urine sur un harnais de maintien,
a) les languettes (11a) étant disposées des deux côtés, dans la zone latérale supérieure de la poche de collecte (8), et
b) les languettes (11b) étant disposées des deux côtés, dans la zone supérieure de la partie de tête (10), en arrière de la coque de recueil d'urine (10b).

2. Dispositif de collecte d'urine pour juments, **caractérisé par** :
- une poche de collecte (8) de forme allongée, pouvant être suspendue sous le ventre du cheval dans une position sensiblement horizontale ;
- une partie centrale (9) se rétrécissant en forme d'entonnoir et se raccordant à la poche de collecte dans la région des pattes arrière du cheval, qui passe entre les pattes arrière et se transforme vers la partie postérieure du cheval en un embout (9a) de forme tubulaire dans une disposition sensiblement verticale, la poche de collecte (8), la partie centrale (9) et l'embout (9a) formant ensemble ce que l'on appelle la partie de recueil (8-9a) ;
- une partie de tête (10) comprenant une coque de recueil d'urine (10b) adaptée à la vulve du cheval et s'appliquant sur cette dernière de manière largement étanche, le goulot (10a) de forme tubulaire de la partie de tête (10) étant relié par une liaison amovible (15), de préférence un adaptateur, à l'embout (9a) ; et
- au moins quelques languettes (11a) et (11b) pourvues d'un ou plusieurs oeillets pour la fixation du dispositif de collecte d'urine sur un harnais de maintien,
a) les languettes (11a) étant disposées des deux côtés, dans la zone latérale supérieure de la poche de collecte (8), et
b) les languettes (11b) étant disposées des deux côtés, dans la zone supérieure de la partie de tête (10), en arrière de la coque de recueil d'urine (10b).

3. Partie de tête (10) pour un dispositif de collecte d'urine, **caractérisée par** :
- une coque de recueil d'urine (10) qui est disposée dans la zone supérieure, s'étend, en vue de côté, en forme de S sur le côté intérieur, est adaptée à la vulve du cheval et s'applique sur cette dernière de manière largement étanche,
- la coque de recueil d'urine étant réalisée, en vue en plan côté intérieur, sous la forme d'une couronne (10d) de forme ovale à ovoïde, qui entoure l'ouverture d'entrée d'urine (10) ; et
- un goulot (10a) de forme tubulaire, qui se trouve dans la zone inférieure de la partie de tête et comporte une partie d'élément de liaison (15a) qui sert, par l'intermédiaire de sa pièce conjuguée, à savoir la partie d'élément de liaison (15b) se trouvant sur l'embout d'entrée d'une poche de collecte d'urine, à réaliser la liaison amovible de la partie de tête (10) avec l'embout d'entrée d'une poche de collecte d'urine.
